# EUROPEAN PATENT APPLICATION

(11) **EP 4 836 543 A1**
(43) Date of publication of application: **04.11.2026**
(21) Application number: 25173349.9
(22) Date of filing: 29.04.2025
(51) Int. Cl.: H04W 52/36, H04W 52/14

(54) **POWER BOOSTING-LIMITED RESOURCE BLOCKS**

(71) Applicant: Nokia Technologies Oy, 02610 Espoo (FI)
(72) Inventor: NGUYEN, Giang, 90540 Oulu (FI); TERVO, Oskari, 90630 Oulu (FI); LEHTI, Arto, 92160 Antony (FR); TIIROLA, Esa Tapani, 90620 Oulu (FI)
(74) Representative: Whiting, Gary

(57) **Abstract**

A user equipment, UE, and a network node of a mobile communication system and methods for operating a UE and a network node are described in which: a determination is made regarding whether a resource block, RB, allocation for a radio signal waveform is a boosting-limited allocation based on a number of defined parameters; and transmission power for the RB allocation is deciding according to the determination of whether the RB allocation is a boosting-limited RB allocation.

## Description

### Technical Field

Various example embodiments relate generally to power boosting-limited resource blocks in a radio signal waveform.

### Background

Data may be transmitted from a user equipment, UE, to a network node of a communication system using defined transmission waveforms. Such data may be organised into resource block allocations. Some resource block allocations may have lower power boosting values than neighbouring resource block allocations.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

In a first aspect, this specification describes a user equipment, UE, of a mobile communication system, the UE comprising: means for determining whether a resource block, RB, allocation for a radio signal waveform (e.g. an OFDM-based waveform, such as DFT-s-OFDM) is a boosting-limited RB allocation; and means for deciding transmission power for the RB allocation according to the determination whether the RB allocation is a boosting-limited RB allocation. The determination of whether the RB allocation is a boosting-limited RB allocation is based on some combination of one or more of (e.g. all of): a first parameter including a maximum number of RBs in a channel bandwidth, N_RB, for communications between the UE and a network node (e.g. a gNB) of the mobile communication system; a second parameter including a guard band parameter based on a guard band, GB_U, on an upper edge of the UE channel bandwidth or based on a guard band, GB_L, on a lower edge of the UE channel bandwidth; a third parameter including a maximum frequency offset, ${Δf}_{OBO}^{L}$, starting from a lower edge of UE channel bandwidth of a spectrum emission mask, SEM, or a maximum frequency offset, ${f}_{OBO}^{U}$, starting from an upper edge of UE channel bandwidth of the SEM that limit the power boosting capability; and a fourth parameter including a spectrum shaping parameter, %SS, based on a percentage of the UE channel bandwidth that is shaped.

The UE may receive a resource allocation for at least one UL transmission, the resource allocation may relate to predefined resource blocks.

The UE may transmit at least one UL transmission using the decided transmit power.

The RB allocation may be defined by an index of the first RB of the RB allocation, RB_start, and a number of RBs in the RB allocation, LCRB.

The determination of whether the RB allocation is a boosting-limited RB allocation may comprise determining whether the following condition is met: $ceil \left(\frac{1}{4} N_RB-\frac{3}{4}L_CRB-\right.$ $\left.\frac{GB _ L + {Δf}_{OBO}^{L}}{2 ∗ {BW}_{RB}}+\frac{%SS ∗ LCRB}{4}\right) < = RB _ start < = floor \left(\frac{1}{4} N_RB-\frac{3}{4}L_CRB-\frac{GB _ L}{2 ∗ {BW}_{RB}}+\frac{%SS ∗ LCRB}{4}\right)$ wherein BW_{RB} is a bandwidth of each RB.

Alternatively, or in addition, the determination of whether the RB allocation is a boosting-limited RB allocation may comprise determining whether the following condition is met: $ceil \left(\frac{1}{4} N_RB-\frac{1}{4}L_CRB-\frac{GB _ L + {Δf}_{OBO}^{L}}{2 ∗ {BW}_{RB}}-\frac{%SS ∗ LCRB}{4}\right) < = RB _ start < = floor \left(\frac{1}{4} N_RB-\frac{1}{4} L_CRB\right.$ $- \left.\frac{GB _ L}{2 ∗ {BW}_{RB}}-\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{3}{4}N_RB-\frac{3}{4}L_CRB+\frac{GB _ U}{2 ∗ {BW}_{RB}}+\frac{%SS ∗ LCRB}{4}\right) < = RB _ start < = floor \left(\frac{3}{4}N_RB-\right.$ $\left.\frac{3}{4}LCRB+\frac{GB _ U + {Δf}_{OBO}^{H}}{2 ∗ {BW}_{RB}}+\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{3}{4}N_RB-\frac{1}{4}L_CRB+\frac{GB _ U}{2 ∗ {BW}_{RB}}-\frac{%SS ∗ LCRB}{4}\right) < = RB _ start < = floor \left(\frac{3}{4}N_RB-\frac{1}{4}\right.$ $\left.L_CRB+\frac{GB _ U + {Δf}_{OBO}^{H}}{2 ∗ {BW}_{RB}}-\frac{%SS ∗ LCRB}{4}\right)$, wherein BW_{RB} is a bandwidth of each RB.

In some example embodiments, deciding transmission power for the RB allocation comprises: deciding a parameter associated with the transmission power, wherein the parameter comprises at least one of: a power boosting, a maximum power reduction, MPR, a power boosting offset, or a MPR offset for the RB allocation. The parameter associated with the transmission power may be specified in a standard or received from the network node. In some example embodiments, the UE comprises means for indicating the decided parameter to the network node.

In some example embodiments, the UE comprises means for receiving configuration information from the network node, wherein the configuration information includes configuration of the modulation and waveform of the radio signal. The configured radio signal waveform may, for example, be a single carrier waveform with phase-rotated phase shift keying modulation, and wherein the determining is in response to the configuration of the single carrier waveforms with phase-rotated phase shift keying modulation.

The UE may further comprise means for receiving an indication to determine whether the RB allocation is a boosting-limited RB allocation, and wherein the determining is in response to the received indication.

The UE may further means for sending, to the network node, an indication whether additional power reduction is needed for boosting-limited RB allocation.

The UE may further means for sending, to the network node, a request not to configure boosting-limited RB allocation.

In a second aspect, this specification describes a user equipment, UE, of a mobile communication system, the UE comprising: means for determining whether a resource block, RB, allocation for a radio signal waveform (e.g. an OFDM-based waveform, such as DFT-s-OFDM) is a boosting-limited RB allocation**;** and means for deciding transmission power for the RB allocation according to the determination whether the RB allocation is a boosting-limited RB allocation. The determination of whether the RB allocation is a boosting-limited RB allocation is based on some combination of one or more of (e.g. all of): a first parameter including a maximum number of RBs in a channel bandwidth, N_RB, for communications between the UE and a network node (e.g. a gNB) of the mobile communication system; a second parameter including either: maximum, ${Δf}_{max}^{L}$, and minimum, ${Δf}_{min}^{L}$, frequency offsets respectively starting from a lowest frequency of the UE channel bandwidth; or minimum, ${Δf}_{min}^{H}$, and maximum, ${Δf}_{max}^{H}$, frequency offsets respectively starting from a highest frequency of the UE channel bandwidth; and a third parameter including a spectrum shaping parameter, %SS, based on a percentage of the UE channel bandwidth that is shaped.

The UE may receive a resource allocation for at least one UL transmission, the resource allocation may relate to predefined resource blocks.

The UE may transmit at least one UL transmission using the decided transmit power.

The RB allocation may be defined by an index of the first RB of the RB allocation, RB_start, and a number of RBs in the RB allocation, LCRB.

The determination of whether the RB allocation is a boosting-limited RB allocation may comprise determining whether the following condition is met: $ceil \left(\frac{1}{4} N_RB-\frac{3}{4}L_CRB-\right.$ $\left.\frac{{Δf}_{max}^{L}}{2 ∗ {BW}_{RB}}+\frac{%SS ∗ LCRB}{4}\right) < = RB_start < = floor \left(\frac{1}{4} N_RB-\frac{3}{4}L_CRB-\frac{{Δf}_{min}^{L}}{2 ∗ {BW}_{RB}}+\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{1}{4} N_RB-\frac{1}{4}L_CRB-\frac{{Δf}_{max}^{L}}{2 ∗ {BW}_{RB}}-\frac{%SS ∗ LCRB}{4}\right) < = RB_start < = floor \left(\frac{1}{4} N_RB-\frac{1}{4}\right.$ $\left.L_CRB-\frac{{Δf}_{min}^{L}}{2 ∗ {BW}_{RB}}-\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{3}{4}N_RB-\frac{3}{4}L_CRB-\frac{{Δf}_{min}^{H}}{2 ∗ {BW}_{RB}}+\frac{%SS ∗ LCRB}{4}\right) < = RB_start < = floor \left(\frac{3}{4}N_RB-\frac{3}{4}\right. L_CRB + \frac{{Δf}_{max}^{H}}{2 ∗ {BW}_{RB}}$ $\left.+\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{3}{4}N_RB-\frac{1}{4}L_CRB+\frac{{Δf}_{min}^{H}}{2 ∗ {BW}_{RB}}-\frac{%SS ∗ LCRB}{4}\right) < = RB_start < = floor \left(\frac{3}{4}N_RB-\frac{1}{4}L_CRB+\frac{{Δf}_{max}^{H}}{2 ∗ {BW}_{RB}}\right.$ $\left.-\frac{%SS ∗ LCRB}{4}\right)$, wherein BW_{RB} is a bandwidth of each RB.

In some example embodiments, deciding transmission power for the RB allocation comprises: deciding a parameter associated with the transmission power, wherein the parameter comprises at least one of: a power boosting, a maximum power reduction, MPR, a power boosting offset, or a MPR offset for the RB allocation. The parameter associated with the transmission power may, for example, be specified in standard or received from the network node.

The UE may further comprise means for indicating the decided parameter to the network node.

The UE may further comprise means for receiving configuration information from the network node, wherein the configuration information includes configuration of the modulation and waveform of the radio signal. The configured radio signal waveform may, for example, be a single carrier waveform with phase-rotated phase shift keying modulation, and wherein the determining is in response to the configuration of the single carrier waveform with phase-rotated phase shift keying modulation.

The UE may further comprise means for receiving an indication to determine whether the RB allocation is a boosting-limited RB allocation, and wherein the determining is in response to the received indication.

The UE may further comprise means for sending, to the network node, an indication whether additional power reduction is needed for boosting-limited RB allocation.

The UE may further comprise means for sending, to the network node, a request not to configure boosting-limited RB allocation.

In some example embodiments, the second parameter is predefined in standard and associated with the RB allocation, or configured by the network node.

In a third aspect, this specification describes a method comprising: determining whether a resource block, RB, allocation for a radio signal waveform (e.g. an OFDM-based waveform, such as DFT-s-OFDM) is a boosting-limited RB allocation; and deciding transmission power for the RB allocation according to the determination whether the RB allocation is a boosting-limited RB allocation. The determination of whether the RB allocation is a boosting-limited RB allocation is based on some combination of one or more of (e.g. all of): a first parameter including a maximum number of RBs in a channel bandwidth, N_RB, for communications between the UE and a network node (e.g. a gNB) of the mobile communication system; a second parameter including a guard band parameter based on a guard band, GB_U, on an upper edge of the UE channel bandwidth or based on a guard band, GB_L, on a lower edge of the UE channel bandwidth; a third parameter including a maximum frequency offset, $Δ {f}_{OBO}^{L}$, starting from a lower edge of UE channel bandwidth of a spectrum emission mask, SEM, or a maximum frequency offset, ${f}_{OBO}^{U}$, starting from an upper edge of UE channel bandwidth of the SEM that limit the power boosting capability; and a fourth parameter including a spectrum shaping parameter, %SS, based on a percentage of the UE channel bandwidth that is shaped.

The UE may receive a resource allocation for at least one UL transmission, the resource allocation may relate to predefined resource blocks.

The UE may transmit at least one UL transmission using the decided transmit power.

The RB allocation may be defined by an index of the first RB of the RB allocation, RB_start, and a number of RBs in the RB allocation, LCRB.

The determination of whether the RB allocation is a boosting-limited RB allocation may comprise determining whether the following condition is met: $ceil \left(\frac{1}{4} N_RB-\frac{3}{4}L_CRB-\right.$ $\left.\frac{GB _ L + {Δf}_{OBO}^{L}}{2 ∗ {BW}_{RB}}+\frac{%SS ∗ LCRB}{4}\right) < = RB_start < = floor \left(\frac{1}{4} N_RB-\frac{3}{4}L_CRB-\frac{GB _ L}{2 ∗ {BW}_{RB}}+\frac{%SS ∗ LCRB}{4}\right)$ wherein BW_{RB} is a bandwidth of each RB.

Alternatively, or in addition, the determination of whether the RB allocation is a boosting-limited RB allocation may comprise determining whether the following condition is met: $ceil \left(\frac{1}{4} N_RB-\frac{1}{4}L_CRB-\frac{GB _ L + {Δf}_{OBO}^{L}}{2 ∗ {BW}_{RB}}-\frac{%SS ∗ LCRB}{4}\right) < = RB_start < = floor \left(\frac{1}{4} N_RB-\frac{1}{4}L_CRB\right.$ $\left.-\frac{GB _ L}{2 ∗ {BW}_{RB}}-\frac{%SS ∗ LCRB}{4}\right)$, wherein BW_{RB} is a bandwidth of each RB..

Alternatively, or in addition, the determination of whether the RB allocation is a boosting-limited RB allocation may comprise determining whether the following condition is met: $ceil \left(\frac{3}{4}N_RB-\frac{3}{4}L_CRB+\frac{GB _ U}{2 ∗ {BW}_{RB}}+\frac{%SS ∗ LCRB}{4}\right) < = RB_start < = floor \left(\frac{3}{4}N_RB-\right.$ $\left.\frac{3}{4}LCRB+\frac{GB _ U + {Δf}_{OBO}^{H}}{2 ∗ {BW}_{RB}}+\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{3}{4}N_RB-\frac{1}{4}L_CRB+\frac{GB _ U}{2 ∗ {BW}_{RB}}-\frac{%SS ∗ LCRB}{4}\right) < = RB_start < = floor \left(\frac{3}{4}N_RB-\frac{1}{4}\right.$ $\left.L_CRB+\frac{GB _ U + {Δf}_{OBO}^{H}}{2 ∗ {BW}_{RB}}-\frac{%SS ∗ LCRB}{4}\right)$, wherein BW_{RB} is a of each RB.

In some example embodiments, deciding transmission power for the RB allocation comprises: deciding a parameter associated with the transmission power, wherein the parameter comprises at least one of: a power boosting, a maximum power reduction, MPR, a power boosting offset, or a MPR offset for the RB allocation. The parameter associated with the transmission power may be specified in a standard or received from the network node. In some example embodiments, the instructions, when executed by the at least one processor, further cause the UE to indicate the decided parameter to the network node.

The method may further comprise receiving configuration information from the network node, wherein the configuration information includes configuration of the modulation and waveform of the radio signal. The configured radio signal waveform may, for example, be a single carrier waveform with phase-rotated phase shift keying modulation, and wherein the determining is in response to the configuration of the single carrier waveforms with phase-rotated phase shift keying modulation.

The method may further comprise receiving an indication to determine whether the RB allocation is a boosting-limited RB allocation, and wherein the determining is in response to the received indication.

The method may further comprise sending, to the network node, an indication whether additional power reduction is needed for boosting-limited RB allocation.

The method may further comprise sending, to the network node, a request not to configure boosting-limited RB allocation.

In a fourth aspect, this specification describes a method comprising: determining whether a resource block, RB, allocation for a radio signal (e.g. an OFDM-based waveform, such as DFT-s-OFDM) is a boosting-limited RB allocation; and deciding transmission power for the RB allocation according to the determination whether the RB allocation is a boosting-limited RB allocation. The determination of whether the RB allocation is a boosting-limited RB allocation is based on some combination of one or more of (e.g. all of): a first parameter including a maximum number of RBs in a channel bandwidth, N_RB, for communications between the UE and a network node (e.g. a gNB) of the mobile communication system; a second parameter including either: maximum, ${Δf}_{max}^{L}$, and minimum, ${Δf}_{min}^{L}$, frequency offsets respectively starting from a lowest frequency of the UE channel bandwidth; or minimum, ${Δf}_{min}^{H}$, and maximum, ${Δf}_{max}^{H}$, frequency offsets respectively starting from a highest frequency of the UE channel bandwidth; and a third parameter including a spectrum shaping parameter, %SS, based on a percentage of the UE channel bandwidth that is shaped.

The UE may receive a resource allocation for at least one UL transmission, the resource allocation may relate to predefined resource blocks.

The UE may transmit at least one UL transmission using the decided transmit power.

The RB allocation may be defined by an index of the first RB of the RB allocation, RB_start, and a number of RBs in the RB allocation, LCRB.

The determination of whether the RB allocation is a boosting-limited RB allocation may comprise determining whether the following condition is met: $ceil \left(\frac{1}{4} N_RB-\frac{3}{4}L_CRB-\right.$ $\left.\frac{{Δf}_{max}^{L}}{2 ∗ {BW}_{RB}}+\frac{%SS ∗ LCRB}{4}\right) < = RB_start < = floor \left(\frac{1}{4} N_RB-\frac{3}{4}L_CRB-\frac{{Δf}_{min}^{L}}{2 ∗ {BW}_{RB}}+\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{1}{4} N_RB-\frac{1}{4}L_CRB-\frac{{Δf}_{max}^{L}}{2 ∗ {BW}_{RB}}-\frac{%SS ∗ LCRB}{4}\right) < = RB_start < = floor \left(\frac{1}{4} N_RB-\frac{1}{4}\right.$ $L_CRB - \frac{{Δf}_{min}^{L}}{2 ∗ {BW}_{RB}} - \left.\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{3}{4}N_RB-\frac{3}{4}L_CRB+\frac{{Δf}_{min}^{H}}{2 ∗ {BW}_{RB}}+\frac{%SS ∗ LCRB}{4}\right) < = RB _ start < = floor \left(\frac{3}{4}N_RB-\frac{3}{4}L_CRB+\frac{{Δf}_{max}^{H}}{2 ∗ {BW}_{RB}}\right.$ $\left.+\frac{%SS ∗ LCRB}{4}\right)$, wherein BW_{RB} is a bandwidth of each RB.

Alternatively, or in addition, the determination of whether the RB allocation is a boosting-limited RB allocation may comprise determining whether the following condition is met: $ceil \left(\frac{3}{4}N_RB-\frac{1}{4}L_CRB+\frac{{Δf}_{min}^{H}}{2 ∗ {BW}_{RB}}-\frac{%SS ∗ LCRB}{4}\right) < = RB _ start < = floor \left(\frac{3}{4}N_RB-\frac{1}{4}L_CRB+\frac{{Δf}_{max}^{H}}{2 ∗ {BW}_{RB}}\right.$ $\left.-\frac{%SS ∗ LCRB}{4}\right)$, wherein BW_{RB} is a bandwidth of each RB.

In some example embodiments, deciding transmission power for the RB allocation comprises: deciding a parameter associated with the transmission power, wherein the parameter comprises at least one of: a power boosting, a maximum power reduction, MPR, a power boosting offset, or a MPR offset for the RB allocation. The parameter associated with the transmission power may, for example, be specified in standard or received from the network node.

The method may further comprise the UE to indicating the decided parameter to the network node.

The method may further comprise receiving configuration information from the network node, wherein the configuration information includes configuration of the modulation and waveform of the radio signal. The configured radio signal waveform may, for example, be a single carrier waveform with phase-rotated phase shift keying modulation, and wherein the determining is in response to the configuration of the single carrier waveform with phase-rotated phase shift keying modulation.

The method may further comprise receiving an indication to determine whether the RB allocation is a boosting-limited RB allocation, and wherein the determining is in response to the received indication.

The method may further comprise sending, to the network node, an indication whether additional power reduction is needed for boosting-limited RB allocation.

The method may further comprise sending, to the network node,a request not to configure boosting-limited RB allocation.

In some example embodiments, the second parameter is predefined in standard and associated with the RB allocation, or configured by the network node.

In a fifth aspect, this specification describes computer program product comprising program instructions which, when executed by a computing apparatus, cause the computing apparatus to: determine whether a resource block, RB, allocation for a radio signal waveform (e.g. an OFDM-based waveform, such as DFT-s-OFDM) is a boosting-limited RB allocation; and decide transmission power for the RB allocation according to the determination whether the RB allocation is a boosting-limited RB allocation. The determination of whether the RB allocation is a boosting-limited RB allocation is based on some combination of one or more of (e.g. all of): a first parameter including a maximum number of RBs in a channel bandwidth, N_RB, for communications between the UE and a network node (e.g. a gNB) of the mobile communication system; a second parameter including a guard band parameter based on a guard band, GB_U, on an upper edge of the UE channel bandwidth or based on a guard band, GB_L, on a lower edge of the UE channel bandwidth; a third parameter including a maximum frequency offset, ${Δf}_{OBO}^{L}$, starting from a lower edge of UE channel bandwidth of a spectrum emission mask, SEM, or a maximum frequency offset, ${f}_{OBO}^{U}$, starting from an upper edge of UE channel bandwidth of the SEM that limit the power boosting capability; and a fourth parameter including a spectrum shaping parameter, %SS, based on a percentage of the UE channel bandwidth that is shaped.

In a sixth aspect, this specification describes computer program product comprising program instructions which, when executed by a computing apparatus, cause the computing apparatus to: determine whether a resource block, RB, allocation for a radio signal (e.g. an OFDM-based waveform, such as DFT-s-OFDM) is a boosting-limited RB allocation; and decide transmission power for the RB allocation according to the determination whether the RB allocation is a boosting-limited RB allocation. The determination of whether the RB allocation is a boosting-limited RB allocation is based on some combination of one or more of (e.g. all of): a first parameter including a maximum number of RBs in a channel bandwidth, N_RB, for communications between the UE and a network node (e.g. a gNB) of the mobile communication system; a second parameter including either: maximum, ${Δf}_{max}^{L}$, and minimum, ${Δf}_{min}^{L}$, frequency offsets respectively starting from a lowest frequency of the UE channel bandwidth; or minimum, ${Δf}_{min}^{H}$, and maximum, ${Δf}_{max}^{H}$, frequency offsets respectively starting from a highest frequency of the UE channel bandwidth; and a third parameter including a spectrum shaping parameter, %SS, based on a percentage of the UE channel bandwidth that is shaped.

In a seventh aspect, this specification describes computer-readable instructions which, when executed by a computing apparatus, cause the computing apparatus to perform (at least) any method as described herein (including the methods of the third and fourth aspects described above).

In an eighth aspect, this specification describes a computer-readable medium (such as a non-transitory computer-readable medium) comprising program instructions stored thereon for performing (at least) any method as described herein (including the methods of the third and fourth aspects described above).

In a tenth aspect, this specification describes a computer program product comprising program instructions which, when the program is executed by an apparatus, cause the apparatus to perform (at least) any method as described herein (including the methods of the third and fourth aspects described above).

In an eleventh aspect, this specification describes an apparatus comprising: at least one processor; and at least one memory storing instructions that, when executed by the at least one processor, causes the apparatus to perform (at least) any method as described herein (including the methods of the third and fourth aspects described above).

### Brief Description of the Drawings

Example embodiments will now be described by way of non-limiting example, with reference to the accompanying drawings, in which:
FIG. 1 is a block diagram of an example system;
FIG. 2 shows Resources Blocks used in example implementations of the principles described herein;
FIG. 3 is a flow diagram showing operations in accordance with an example embodiment;
FIG. 4 is a signal flow diagram in accordance with an example embodiment;
FIG. 5 shows a UE channel and spectrum emission mask in accordance with an example embodiment;
FIG. 6 shows a shaped UE channel in accordance with an example embodiment.
FIG. 7 shows a UE channel in accordance with an example embodiment;
FIGS. 8 to 11 are signal flow diagrams in accordance with example embodiments;
FIG. 12 illustrates an example of an apparatus; and
FIG. 13 illustrates an example of non-transitory media.

### Detailed Description

Various example embodiments relate generally to power boosting-limited Resource Blocks, RBs, in a radio signal waveform, as discussed in detail below.

The following embodiments are provided by way of example only. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a communication network, such as any of the following radio access technologies (RATs): Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is capable of controlling radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

The term "terminal device" refers to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include e.g. a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

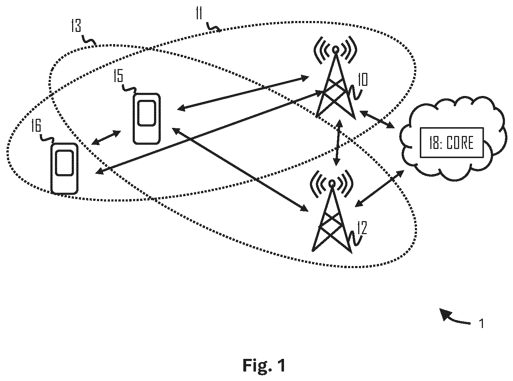

FIG. 1 illustrates an example of a communication network, indicated generally by the reference numeral 1, to which examples disclosed herein may be applied. The communication network or a cellular communication network may comprise a network node 10 providing one or more cells, such as cell 11, and a network node 12 providing one or more other cells, such as cell 13. Each cell may be, e.g., a macro cell, a micro cell, femto, or a pico cell, for example. The cell may define a coverage area or a service area of the corresponding access node.

The network node 10 may provide a user equipment (UE) 15 (which may be one of a plurality of similar UEs being served by the network node 10) with wireless access to the communication network. The wireless access may comprise downlink (DL) communication from the network node 10 to the UE 15 and uplink (UL) communication from the UE 15 to the network node 10. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 15, 16 in the system. Each of them may be served by the same or by different network nodes 10, 12. A UE may be configured with dual connectivity (DC), wherein the UE, e.g. UE 15, may be connected to multiple network nodes 10, 12. The UEs 15, 16 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 10 and 12 may be further connected via another interface to a core network 18 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

Peak-average power ratio (PAPR) is a metric used in some physical layer designs. PAPR may be defined as the ratio of peak power to average power of time-domain transmit signals, and may concern signals at the input of a power amplifier (PA). In a waveform with high PAPR, there may be occasional surges of signal level forming high-power peaks in the considered signal duration.

Some high PAPR waveforms may operate with a transmitter that reduces the signal power to be below the maximum power allowed by the PA. This can be provided to avoid high-level peaks hitting the saturated-power region of the PA that not only causes signal distortions but can also generate unwanted emission to adjacent frequencies. However, reducing transmit power tends to equivalently reduce coverage. This can be a problem for UL transmissions as UEs are often relatively low power devices (e.g. when compared with a network node, such as a base station). On top of that, a high PAPR waveform can also degrade PA efficiency which may result in an increased transmitter power consumption.

Using a low PAPR waveform can improve uplink coverage by allowing more headroom to increase the transmit power. Low PAPR waveforms have been supported in 5G, and studying new PAPR waveforms which have even lower PAPR than the currently supported ones is a research topic in 6G physical layer design.

By way of example, discrete Fourier transform spread orthogonal frequency-division multiplexing (DFT-s-OFDM) waveforms may have lower PAPR than cyclic-prefix OFDM (CP-OFDM) waveforms. From studies in 5G, DFT-s-OFDM with pi/2-BPSK modulation and its variants with spectrum shaping have been shown to provide good PAPR performance. For 6G, trellis modulations are being considered to further reduce PAPR of transmitted signals. For example, some existing proposals for trellis modulations are based on pi/2-BPSK based waveforms or based on QPSK; other solutions are also possible.

In some existing 3GPP standards, the impact of a waveform to the UL transmit power is realized by a required power backoff from the UE maximum output power, or so-called maximum power reduction (MPR), wherein MPR in this context relates to transmit power reductions or other transmit power related parameters. The MPR values for a specific waveform can be defined based on examining impacts of different transmit power levels (as a function of power backoffs) on a minimum set of RF requirements. The RF requirement may include Error Vector Magnitude (EVM), in-band emission (IBE), adjacent channel leaked ratio (ACLR), spectrum emission mask (SEM), spurious emission and occupied bandwidth (OBW).

In TS38.101-1, for example, 3GPP has defined MPR values according to different power classes (PCs), waveforms and resource block (RB) allocation configurations (i.e., edge, outer and inner). Below is example of an MPR table for PC2:

| Modulation | MPR (dB) | | | |
|---|---|---|---|---|
| | Edge RB allocations | Outer RB allocations | Inner RB allocations | |
| DFT-s-OFDM | Pi/2 BPSK | ≤ 3.5 | ≤ 0.5 | 0 |
| | QPSK | ≤ 3.5 | ≤ 1 | 0 |
| | 16 QAM | ≤ 3.5 | ≤ 2 | ≤ 1 |
| | 64 QAM | ≤ 3.5 | ≤ 2.5 | |
| | 256 QAM | ≤ 4.5 | | |
| CP-OFDM | QPSK | ≤ 3.5 | ≤ 3 | ≤ 1.5 |
| | 16 QAM | ≤ 3.5 | ≤ 3 | ≤ 2 |
| | 64 QAM | ≤ 3.5 | | |
| | 256 QAM | ≤ 6.5 | | |

In 3GPP specification TS38.101-1, the required MPR for lower order modulation (such as BPSK or QPSK) is specified as being lower than for high order modulation (such as 16QAM and beyond). The lowest MPR is applied for DFT-s-OFDM with pi/2 BPSK in addition to power boosting capability for the inner RB allocation region. Many of the example embodiments described herein focus on DFT-s-OFDM with pi/2-BPSK waveform, but it should be noted that the principles described herein are applicable to waveforms having different modulation schemes.

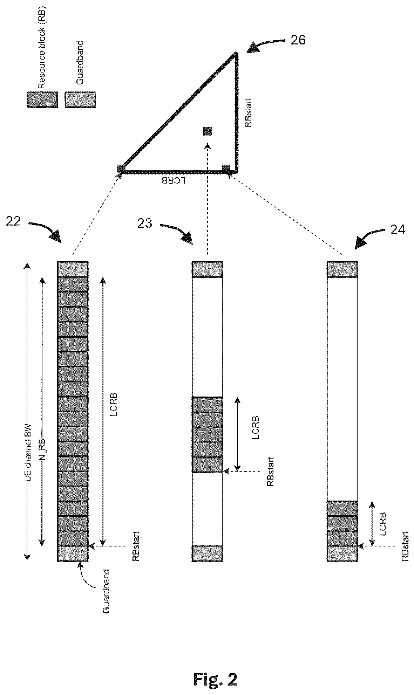

FIG. 2 shows Resources Blocks, RBs, used in example implementations of the principles described herein. The RBs shown in FIG. 2 may, for example, be used in carrying a DFT-s-OFDM waveform (or some similar waveform).

A first set of RB allocation example, indicated generally by the reference numeral 22, includes a maximum allowed number of RBs, N_RB, in a channel bandwidth that can be used for communications a UE and a network node. If all of the available RBs are used in a particular UE channel (as shown in the first set of RBs 22), then the length of number of continuous RBs allocated for the UE channel, L_CRB, is equal to N_RB.

A second set of RB allocation example, indicated generally by the reference numeral 23, includes a subset of the total number of RBs in the channel bandwidth. The RBs of the second set are defined by an index of the first RB of the block, RB_start, and the number of RBs, L_CRB, allocated for the UE channel.

A third set of RB allocation example, indicated by the reference numeral 24, shows a difference subset of RBs, which is again defined by the parameters RB_start and L_CRB. In the third set, RB_start is zero.

In all RB allocation examples, the UE channel bandwidth is collectively formed by the RB allocation and the guard band at each end of the UE channel bandwidth.

FIG. 2 also shows the sets of RB allocations 22 to 24 plotted on a 2-dimensional RB allocation map 26, in which the RB_start parameter is plotted on the x-axis and the L_CRB parameter is plotted on the y-axis. For the first set of RBs 22, RB_start is zero and L_CRB is the maximum number of RBs available (18 in the example shown). For the second set of RBs 23, RB_start and L_CRB are both above zero, but below the maximum number of RBs. Finally, for the third set of RBs 24, RB_start is zero and L_CRB is three. The 2-dimensional RB allocation map is used, for example, to provide the comprehensive view of transmit power of all possible RB allocation configurations of the given UE channel bandwidth.

Simulation studies have shown that certain regions, which correspond to a set of RB allocations, in the RB allocation map have lower power boosting values than the neighbouring RB allocations. This effect has been observed, for example, during DFT-s-OFDM pi/2-BPSK based simulations (e.g., plain pi/2-BPSK or pi/2-BPSK with Frequency Domain Spectrum Shaping (FDSS) or Frequency Domain Spectrum Shaping with Spectrum Extension (FDSS-SE)) for high power UE (PC2 or higher) transmitting with channel BW >= 50MHz. Causes for the dropping power boosting effect of the so-called V-shape lines may include one or more of: i) pi/2-BPSK based modulation creating strong third-order inter-modulation distortion (IMD3) components; ii) only RB allocation configurations belonging to the boosting-limited regions create such IMD3 falls at the frequencies of the narrow segment of the SEM mask; iii) the narrow segment having stricter SEM limits than other segments (e.g., see SEM requirements in TS38.101-1). Thus, the room for power boosting for these RB allocations is more limited than others.

The existence of the boosting-limited regions can be problematic for defining the RB allocations for power boosting values. The boosting-limited RBs span across inner and outer RB allocation regions, and each RB allocation length may have correspondingly 2 to 4 RB allocation settings (i.e., different index of the first RB) having the reduced power boosting issues discussed above. The existence of boosting-limited RBs can complicate the definition of power boosting regions for single carrier waveform with phase-rotated phase shift keying, such as for example, DFT-s-OFDM pi/2-BPSK and its variants.

In some example embodiments, it would be advantageous to provide an algorithm for defining the boosting-limited RBs accurately that is relatively simple, but also effective in not limiting power boosting for other RBs.

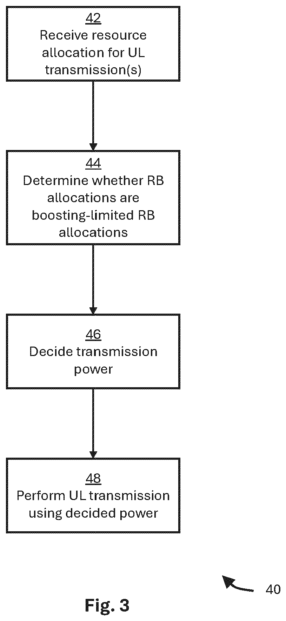

FIG. 3 is a flow diagram showing operations 40 that may be performed by one or more example embodiments. The operations 40 may be performed by hardware, software, firmware or a combination thereof. The operations 40 may be performed by one, or respective, means, a means being any suitable means such as one or more processors or controllers in combination with computer-readable instructions provided on one or more memories.

The operations 40 may, for example, be performed by a first apparatus, for example a UE. The UE may be any of the UEs 14, 15 illustrated in FIG. 1 (or some similar UE). The order of operations 40 is not necessarily indicative of their order of processing or performance.

A first operation 42 may comprise receiving a resource allocation for at least one UL transmission. The resource allocation may cover predefined resource blocks.

A second operation 44 may comprise determining whether a resource block, RB, allocation for a radio signal waveform is a boosting-limited RB allocation.

A third operation 46 may comprise deciding transmission power for the RB allocation based, at least in part, on the determination of whether the RB allocation is a boosting-limited RB allocation, as made in the second operation 44.

A fourth operation 48 may comprise performing UL transmission using the power decided in the third operation 46.

Two embodiments are described in detail below that may be used to implement the second operation 44 described above. These embodiments provide methods for determining whether RB allocations for particular waveforms are boosting-limited (e.g. falling within boosting-limited regions).

The determination approaches seek to take into account many possible factors impacting the exact configuration of the boosting-limited RB allocations. Closed form calculations are described that are flexible and easily implemented while reusing existing MPR tables.

In the first embodiment discussed in detail below, the second operation 44 determines whether a RB allocation for a radio signal waveform is a boosting-limited RB allocation based on some combination of (e.g. all of) first to fourth parameters. The first parameter includes a maximum number of RBs in a channel bandwidth, N_RB, for communications between the UE and a network node of the mobile communication system. The second parameter includes a guard band parameter based on a guard band, GB_U, on an upper edge of the UE channel bandwidth or based on a guard band, GB_L, on a lower edge of the UE channel bandwidth. The third parameter includes a maximum frequency offset, ${Δf}_{OBO}^{L}$, starting from a lower edge of channel bandwidth of a spectrum emission mask, SEM, or a maximum frequency offset, ${Δf}_{OBO}^{U}$, starting from an upper edge of channel bandwidth of the SEM that limit the power boosting capability. The fourth parameter including a spectrum shaping parameter, %SS, based on a percentage of the channel bandwidth that is shaped.

In the second embodiment discussed in detail below, the second operation 44 determines whether a RB allocation for a radio signal waveform is a boosting-limited RB allocation based on some combination of (e.g. all of) first to third parameters. The first parameter includes a maximum number of RBs in a channel bandwidth, N_RB, for communications between the UE and a network node of the mobile communication system. The second parameter includes either: maximum, ${Δf}_{max}^{L}$, and minimum, ${Δf}_{min}^{L}$, frequency offsets of an emission mask that limits the power boosting capability respectively starting from a lowest frequency of the channel bandwidth; or minimum, ${Δf}_{min}^{H}$, and maximum, ${Δf}_{min}^{H}$, frequency offsets of an emission mask that limits the power boosting capability respectively starting from a highest frequency of the channel bandwidth. The third parameter includes a spectrum shaping parameter, %SS, based on a percentage of the channel bandwidth that is shaped.

In New Radio (5G) and the earlier generation systems, the UE maximum power has been defined based, for example, on nominal power for the corresponding power class, MPR and possible power boosting. In 6G it may also be defined in some other way, e.g. maximum power for the highest modulation order and full channel bandwidth allocation and some delta related to e.g. lower modulation orders and frequency allocations. The example embodiments discussed herein generally relate to 5G examples, but the principles can be applied differently; for example some other delta parameter corresponding to maximum power of the related modulation and frequency allocation.

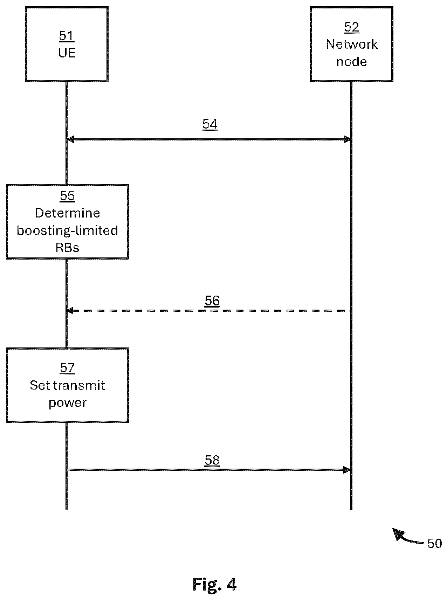

FIG. 4 is a signal flow diagram, indicated generally by the reference numeral 50, in accordance with an example embodiment. The message flow diagram 50 shows messages transferred between, and actions taken at, a UE 51 and a network node 52. The signal flow diagram 50 shows an example implementation of the operations 40 described above.

The operations of the signal flow diagram 50 may be performed by hardware, software, firmware or a combination thereof. The operations 50 may be performed by one, or respective, means, a means being any suitable means such as one or more processors or controllers in combination with computer-readable instructions provided on one or more memories. Note that the order of operations of the signal flow diagram 50 is not necessarily indicative of their order of processing or performance.

The flow diagram 50 starts with configuration information being exchanged between the UE 51 and the network node 52 in operation 54.

The exchange of configuration information may include the UE 51 receiving configuration information from the network node 52 including configuration of the modulation and waveform of the radio signal. The configured radio signal waveform may be a single carrier waveform (such as DFT-s-OFDM) with phase-rotated phase shift keying modulation (such as pi/2-BPSK, pi/4-QPSK or pi/M-MPSK).

At operation 55, boosting-limited RBs are determined (at the UE). The operation 55 is therefore an implementation of the second operation 44 described above with reference to FIG. 3.

At operation 56, an instruction, such as network scheduling information, is provided from the network node 52 to the UE 51.

At operation 57, the transmit power for the UE is set based, at least in part, on the determination made in operation 55. The operation 57 is therefore an implementation of the third operation 46 described above with reference to FIG. 3.

Finally, at operation 58 data is transmitted from the UE 51 to the network node 52.

A first example embodiment relates to a case in which power boosting is limited due to a narrow segment of the 5G's spectrum emission mask, SEM.

A calculation for determining the boosting-limited RB allocations in this embodiment is provided below in which a boosting-limited RB allocation has the index of the first RB, denoted as RB_start, and the length of number of continuous RBs allocated for the UE channel, denoted as L_CRB, satisfying one of the following conditions: $ceil \left(\frac{1}{4} N_RB-\frac{3}{4}L_CRB-\frac{GB _ L + {Δf}_{OBO}^{L}}{2 ∗ {BW}_{RB}}+\frac{%SS ∗ LCRB}{4}\right) < = RB_start < = floor \left(\begin{matrix}\frac{1}{4} N_RB - \\ \frac{3}{4} L_CRB - \frac{GB _ L}{2 ∗ {BW}_{RB}} + \frac{%SS ∗ LCRB}{4}\end{matrix}\right)$ 1) $ceil \left(\frac{1}{4} N_RB-\frac{1}{4}L_CRB-\frac{GB _ L + {Δf}_{OBO}^{L}}{2 ∗ {BW}_{RB}}-\frac{%SS ∗ LCRB}{4}\right) < = RB_start < = floor \left(\begin{matrix}\frac{1}{4} N_RB - \\ \frac{1}{4} L_CRB - \frac{GB _ L}{2 ∗ {BW}_{RB}} - \frac{%SS ∗ LCRB}{4}\end{matrix}\right)$ 2) $ceil \left(\frac{3}{4}N_RB-\frac{3}{4}L_CRB+\frac{GB _ U}{2 ∗ {BW}_{RB}}+\frac{%SS ∗ LCRB}{4}\right) < = RB_start < = floor \left(\begin{matrix}\frac{3}{4} N_RB - \\ \frac{3}{4} L_CRB + \frac{GB _ U + {Δf}_{OBO}^{H}}{2 ∗ {BW}_{RB}} + \frac{%SS ∗ LCRB}{4}\end{matrix}\right)$ 3) $ceil \left(\frac{3}{4}N_RB-\frac{1}{4}L_CRB+\frac{GB _ U}{2 ∗ {BW}_{RB}}-\frac{%SS ∗ LCRB}{4}\right) < = RB_start < = floor \left(\begin{matrix}\frac{3}{4} N_RB - \frac{1}{4} \\ L_CRB + \frac{GB _ U + {Δf}_{OBO}^{H}}{2 ∗ {BW}_{RB}} - \frac{%SS ∗ LCRB}{4}\end{matrix}\right)$ 4)

Where:
- N_RB: transmission BW configuration, or maximum number of RBs of the UE channel bandwidth, as discussed above.
- L_CRB: transmission BW, or the length of RB allocations (without possible spectrum extension), as discussed above.
- ***GB_L:*** Guard-band on the lower edge of UE channel BW. Note that this is the guard-band configured for the UE channel taking into account also the possible error due to misalignment with the channel raster. This guard-band may be SCS dependent.
- ***GB_U:*** Guard-band on the upper edge of UE channel BW. Note that this is the guard-band that configured for the UE channel taking into account also the possible error due to misalignment with the channel raster. This guard-band may be SCS dependent.
- ${Δf}_{OBO}^{L}$: the maximum frequency offset starting from the lower edge of the UE channel BW of the narrow segment of the SEM mask (1MHz in 5G, for example).
- ${Δf}_{OBO}^{U}$: the maximum frequency offset starting from the upper edge of the UE channel BW of the narrow segment of the SEM mask (1MHz in 5G, for example).
- ***BW_{RB}*:** bandwidth of one RB. For example, in 5G with 12 subcarrier per RB, *BW_{RB} =* 12 * *SCS*
- %SS: percentage of UE channel BW that is shaped. For example, if FDSS-SE is applied with 25% SE, then %SS = 25%. For another example, if pi/4-BPSK modulation is applied, then the 25% of UE channel BW is shaped, hence %SS = 25%

These equations could be documented in a standards specification (the details of which may be known to the UE when implementing operation 55). By the above calculation, the UE can determine from scheduling information if the configured RB allocation is the boosting-limited one. Based on that an appropriate transmit power/MPR values will be applied. The UE can determine the transmit power/MPR values depending on NW configurations or pre-defined specifications.

An example of a NR MPR table considering the MPR for boosting-limited RBs is provided below in which additional specification for boosting-limited RB allocations may be included as a NOTE rather than reformatting the current table:

### Maximum power reduction (MPR) for power class 2

| Modulation | | MPR (dB) | | |
|---|---|---|---|---|
| | | Edge RB allocations | Outer RB allocations | Inner RB allocations |
| DFT-s-OFDM | Pi/2 BPSK | ≤ 3.5^{X} | ≤ 0.5^{X} | 0^{1,X} |
| | QPSK | ≤ 3.5 | ≤ 1 | 0² |
| | 16 QAM | ≤ 3.5 | ≤ 2 | ≤ 1 |
| | 64 QAM | ≤ 3.5 | ≤ 2.5 | |
| | 256 QAM | ≤ 4.5 | | |
| CP-OFDM | QPSK | ≤ 3.5 | ≤ 3 | ≤ 1.5 |
| | 16 QAM | ≤ 3.5 | ≤ 3 | ≤ 2 |
| | 64 QAM | ≤ 3.5 | | |
| | 256 QAM | ≤ 6.5 | | |
| NOTE 1: Applicable for a UE indicating support for UE capability *powerBoosting-pi2BPSK-QPSK-r18* or *powerBoosting-pi2BPSK-QPSK-Modified-r18* and if the IE *powerBoostPi2BPSK-r18* is set to 1. The reference power is increased by [ΔP_{PowerBoost} - ΔP_{PowerClass}] | | | | |
| NOTE 2: Applicable for a UE indicating support for UE capability *powerBoosting-pi2BPSK-QPSK-r18* or *powerBoosting-pi2BPSK-QPSK-Modified-r18* and if the IE *powerBoostQPSK-r18* is set to 1. The reference power is increased by [ΔP_{PowerBoost} - ΔP_{PowerClass}] | | | | |
| NOTE X: For RB allocation belonging to the set of RB allocations defined in Clause [x.x.x], if UE indicating support for UE capability *powerBoosting-pi2BPSK-QPSK-r18* or *powerBoosting-pi2BPSK-QPSK-Modified-r18* or [*powerBoosting-pi2BPSK-rxx],* the reference power is increased by [ΔP_{PowerBoost} - ΔMPR_{pi2BPSK} - ΔP_{PowerClass}] | | | | |

In the table:
- *ΔMPR_{pi2BPSK}* is the reduction from the maximum power boosting value the RB allocation regions:
   ∘ Specification on *ΔMPR_{pi2BPSK}* can be added to Clause 6.2.4 TS38.101-1 including values for *ΔMPR_{pi2BPSK}* with respect to different configuration of the pi/2-BPSK waveforms.
   ∘ Relation of *ΔMPR_{pi2BPSK}* and duty cycle could be mentioned, e.g., allow longer duty cycle for these RB allocations.
- *"the set of RB allocations defined in [x.x.x]"* corresponds to the formulas to determine boosting-limited RB allocations, i.e., the formulas defined in the equations above.
   ∘ The relevant equations can be added to the specification under the table.
- *[powerBoosting-pi2BPSK-rxx]* represents the UE boosting capability for Pi/2-BPSK based modulations defined in future releases.

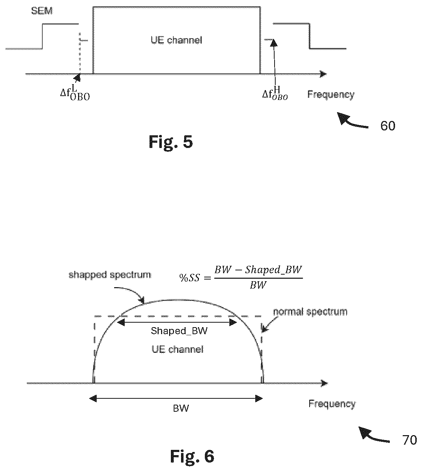

FIG. 5 shows a UE channel and SEM, indicated generally by the reference numeral 60, in accordance with an example embodiment. The maximum frequency offset ${Δf}_{OBO}^{L}$ starting from the lower edge of the UE channel BW of the narrow segment of the SEM mask referred to in the equations above is labelled in FIG. 5 as ${Δf}_{OBO}^{L}$*.* The maximum frequency offset ${Δf}_{OBO}^{U}$ starting from the upper edge of the UE channel BW of the narrow segment of the SEM mask is also visible in FIG. 5.

FIG. 6 shows a shaped UE channel, indicated generally by the reference numeral 70, in accordance with an example embodiment. FIG. 6 shows the normal (unshaped) spectrum of the UE channel in dotted form. The percentage of UE channel BW that is shaped **%*SS*** is also defined in FIG. 6. Referred to in the equations above is labelled in FIG. 6.

The second embodiment extends to a case in which boosting is limited or more power reduction is required due to a specific emission mask, SEM. This may, for example, address future 6G concepts on RF requirements because of which SEM might not be the limiting factor, but other RF requirements.

An example of a possible scenario could be: when the local oscillator, LO, frequency of the UE is not aligned with but sufficiently far enough from the UE channel's centre frequency, it is possible that the intermodulation distortions, IMDs, of the allocation and carrier leakage fall into in-band frequency range, which is strong enough to violate the in-band emission requirements. Illustration for this scenario is shown below.

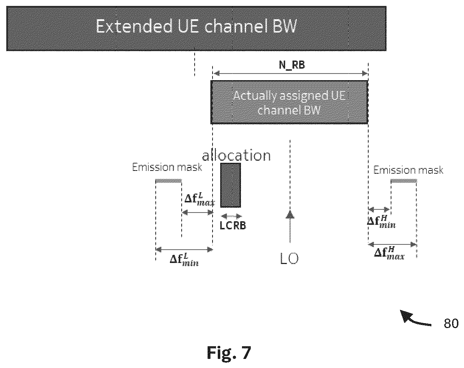

FIG. 7 shows a UE channel, indicated generally by the reference numeral 80, in accordance with an example embodiment. The UE channel 80 is relevant to examples of the second embodiment. In FIG. 7, the LO frequency is assumed to be at the centre of the actually assigned UE channel bandwidth and far away from the centre of the extended UE channel BW.

In the second embodiment, a boosting-limited RB allocations has the index of the first RB, denoted as RB_start, and the length of number of continuous RBs allocated for the UE channel, denoted as L_CRB, satisfying one of the following conditions: $ceil \left(\frac{1}{4} N_RB-\frac{3}{4}L_CRB-\frac{{Δf}_{max}^{L}}{2 ∗ {BW}_{RB}}+\frac{%SS ∗ LCRB}{4}\right) < = RB _ start < = floor \left(\begin{matrix}\frac{1}{4} N _ RB - \\ \frac{3}{4} L _ CRB - \frac{{Δf}_{min}^{L}}{2 ∗ {BW}_{RB}} + \frac{%SS ∗ LCRB}{4}\end{matrix}\right)$ 1) $ceil \left(\frac{1}{4} N_RB-\frac{1}{4}L_CRB-\frac{{Δf}_{max}^{L}}{2 ∗ {BW}_{RB}}-\frac{%SS ∗ LCRB}{4}\right) < = RB _ start < = floor \left(\begin{matrix}\frac{1}{4} N _ RB - \frac{1}{4} \\ L _ CRB - \frac{{Δf}_{min}^{L}}{2 ∗ {BW}_{RB}} - \frac{%SS ∗ LCRB}{4}\end{matrix}\right)$ 2) $ceil \left(\frac{3}{4}N_RB-\frac{3}{4}L_CRB+\frac{{Δf}_{min}^{H}}{2 ∗ {BW}_{RB}}+\frac{%SS ∗ LCRB}{4}\right) < = RB _ start < = floor \left(\begin{matrix}\frac{3}{4} N _ RB - \\ \frac{3}{4} L _ CRB + \frac{{Δf}_{max}^{H}}{2 ∗ {BW}_{RB}} - \frac{%SS ∗ LCRB}{4}\end{matrix}\right)$ 3) $ceil \left(\frac{3}{4}N_RB-\frac{1}{4}L_CRB+\frac{{Δf}_{min}^{H}}{2 ∗ {BW}_{RB}}-\frac{%SS ∗ LCRB}{4}\right) < = RB _ start < = floor \left(\begin{matrix}\frac{3}{4} N _ RB - \frac{1}{4} \\ L _ CRB + \frac{{Δf}_{max}^{H}}{2 ∗ {BW}_{RB}} - \frac{%SS ∗ LCRB}{4}\end{matrix}\right)$ 4)

Where parameters are:
- N_RB: the maximum allowed number of RBs in the actually assigned UE channel BW [38.101-1]
- L_CRB: allocated transmission bandwidth or the length of RB allocations [38.101-1] ] (without possible spectrum extension)
- ${Δf}_{min}^{L} , {Δf}_{max}^{L}$: the minimum and maximum frequency offsets (as shown in FIG. 7) starting from the lowest frequency of the UE channel BW. $\left[Δ{f}_{min}^{L}, Δ{f}_{max}^{L}\right]$ represents the frequency range of the concerned emission mask on the lower side of UE channel BW. These offsets include possible guard band defined for the assigned UE channel BW.
- $Δ {f}_{min}^{H} , Δ {f}_{max}^{H}$: the minimum and maximum frequency offsets (as shown in FIG. 7) starting from the highest frequency of the UE channel BW. $\left[Δ{f}_{min}^{H}, Δ{f}_{max}^{H}\right]$ represents the frequency range of the concerned emission mask on the upper side of UE channel BW. These offsets include possible guard band defined for the assigned UE channel BW.
- ***BW_{RB}*:** bandwidth of one RB. For example, in 5G with 12 subcarrier per RB, *BW_{RB} =* 12 * *SCS*
- %SS: percentage of UE channel BW that is shaped. For example, if FDSS-SE is applied with 25% SE, then %*SS* = 25%. For another example, if pi/4-BPSK modulation is applied, then the 25% of UE channel BW is shaped, hence %*SS_{BW}* = 25%.

In contrast to the first embodiment where emission mask is SEM and well defined in the specification, the frequencies of the emission mask in the second embodiment may generally assumed to be dependent on the configuration of UE channel and allocations.

In one example implementation, the ranges of frequency offsets of the emission mask may be predefined in the relevant standards specification as a function of the UE channel. For example, the offsets may be defined as a function of LCRB, LO frequency and the centre of the RB allocation.

In another example implementation, the network indicates the UE the limiting emission requirement and/or ranges of frequency offsets of the emission so that UE can determine boosting-limited RB allocations due to the concern emission mask.

The network may, for example, indicate implicitly or explicitly the power boosting, MPR, or corresponding offset for the boosting-limited RB allocations. Alternatively, they may be predefined in the relevant specification.

Example of an NR MPR table considering the MPR for boosting-limited RBs could be as below where additional specification for boosting-limited RB allocations may be included as a NOTE rather than reformatting the current table:

### Maximum power reduction (MPR) for power class 2

| Modulation | | MPR (dB) | | |
|---|---|---|---|---|
| | | Edge RB allocations | Outer RB allocations | Inner RB allocations |
| DFT-s-OFDM | Pi/2 BPSK | ≤ 3.5^{Y} | ≤ 0.5^{Y} | 0^{1,Y} |
| | QPSK | ≤ 3.5 | ≤ 1 | 0² |
| | 16 QAM | ≤ 3.5 | ≤ 2 | ≤ 1 |
| | 64 QAM | ≤ 3.5 | ≤ 2.5 | |
| | 256 QAM | ≤ 4.5 | | |
| CP-OFDM | QPSK | ≤ 3.5 | ≤ 3 | ≤ 1.5 |
| | 16 QAM | ≤ 3.5 | ≤ 3 | ≤ 2 |
| | 64 QAM | ≤ 3.5 | | |
| | 256 QAM | ≤ 6.5 | | |
| NOTE 1: Applicable for a UE indicating support for UE capability *powerBoosting-pi2BPSK-QPSK-r18* or *powerBoosting-pi2BPSK-QPSK-Modified-r18* and if the IE *powerBoostPi2BPSK-r18* is set to 1. The reference power is increased by [ΔP_{PowerBoost} - ΔP_{PowerClass}] | | | | |
| NOTE 2: Applicable for a UE indicating support for UE capability *powerBoosting-pi2BPSK-QPSK-r18* or *powerBoosting-pi2BPSK-QPSK-Modified-r18* and if the IE *powerBoostQPSK-r18* is set to 1. The reference power is increased by [ΔP_{PowerBoost} - ΔP_{PowerClass}] | | | | |
| NOTE Y: When [*description on scenario when LO is not aligned with the center of the reserved UE channel BW*]*,* for RB allocation belongs to the set of RB allocations defined in Clause [x.x.x], if UE indicating support for UE capability *powerBoosting-pi2BPSK-QPSK-r18* or *powerBoosting-pi2BPSK-QPSK-Modified-r18* or [*powerBoosting-pi2BPSK-rxx*]*,* and if UE is indicated [*signalling for limiting emission masks*]*,* the reference power is increased by [ΔP_{PowerBoost} - ΔMPR_{pi2BPSK} - ΔP_{PowerClass}] | | | | |

In the table:
- *ΔMPR_{pi2BPSK}* is the reduction from the maximum power boosting value the RB allocation regions:
   ∘ Specification on *ΔMPR_{pi2BPSK}* can be added to Clause 6.2.4 TS38.101-1 including values for *ΔMPR_{pi2BPSK}* with respect to different configuration of the pi/2-BPSK waveforms, and *signalling for limiting emission masks.*
   ∘ Relation of *ΔMPR_{pi2BPSK}* and duty cycle could be mentioned, e.g., allow longer duty cycle for these RB allocations.
- [*signalling for limiting emission masks*]: as boosting-limited RB allocations and *ΔMPR_{pi2BPSK}* may be dependent on a specific RF requirement.
- *the set of RB allocations defined in [x.x.x]"* corresponds to the formulas to determine boosting-limited RB allocations, i.e., defined in the equations above.
   ∘ The respective equations can be added to the specification under the table.
- *[powerBoosting-pi2BPSK-rxx]* represents the UE boosting capability for Pi/2-BPSK based modulations defined in future releases.

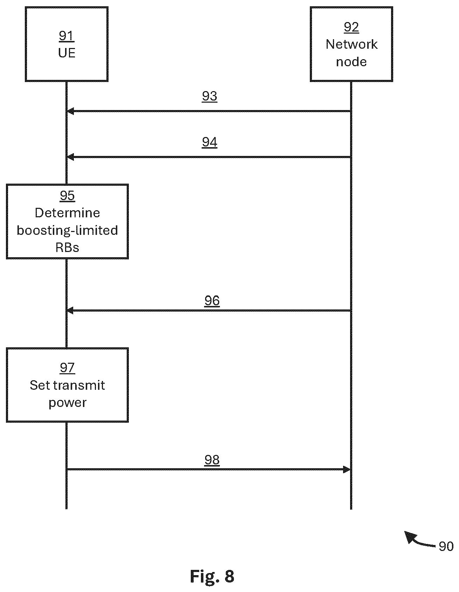

FIGS. 8 to 11 are signal flow diagrams in accordance with example embodiments. The signal flow diagrams include a determination of boosting-limited RBs. This operation may be implemented in accordance with either the first or second embodiments described above, or some similar algorithm.

FIG. 8 is a signal flow diagram, indicated generally by the reference numeral 90, in accordance with an example embodiment. The signal flow diagram 90 shows messages transmitted between, and operations performed at, a UE 91 (which may be similar to the UE described above) and a network node 92 (that may be similar to the network node 52 described above) in an example embodiment. The network node 92 may be a gNB.

The operations of the signal flow diagram 90 may be performed by hardware, software, firmware or a combination thereof. The operations 90 may be performed by one, or respective, means, a means being any suitable means such as one or more processors or controllers in combination with computer-readable instructions provided on one or more memories. Note that the order of operations of the signal flow diagram 90 is not necessarily indicative of their order of processing or performance.

In operation 93, the network node 92 indicates configuration information to the UE 91. The configuration information may include configuration of the modulation and waveform of the radio signal. The configured radio signal waveform may be a single carrier waveform with phase-rotated phase shift keying modulation (such as DFT-s-OFDM pi/2 BPSK).

In operation 94, the network node 92 indicates to the UE a parameter for determining the MPR applying to the determined boosting-limited RB allocations (i.e., RB allocation calculated from the set of equations). The parameter may include:
- a MPR value; or
- a delta value with respect to the MPR of the RB allocation regions it belonged to is predefined in the specification.

Alternatively, the parameter for determining the MPR may be predefined in the specifications.

In operation 95, the UE 91 determines the boosting-limited RB allocations after receiving configuration for pi/2-BPSK based modulation. Alternatively, there may be a separate indication from gNB to UE to trigger the determination of boosting-limited RB allocations if gNB sends scheduling info which includes a configuration for a certain range of RB allocations. In this way, UE may just need to calculate and store in the memory a subset of boosting-limited RBs as such saving UE calculation resources.

In operation 96, the network node 92 sends scheduling info (e.g. in the form of downlink control information, DCI).

If the configured allocation is of the boosting-limited RB allocations then, in operation 97, the UE 91 determines Tx power following the parameter indicated or from a standards specification. The UE configures Tx power accordingly.

At operation 98, a PUSCH transmission is made from the UE to the network node using the transmit power as set in operation 97.

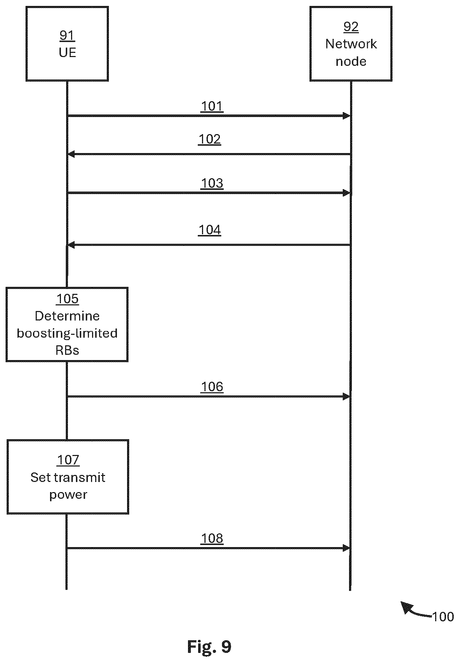

FIG. 9 is a signal flow diagram, indicated generally by the reference numeral 100, in accordance with an example embodiment. The signal flow diagram 100 shows messages transmitted between, and operations performed at, the UE 91 and the network node 92 in an example embodiment.

The operations of the signal flow diagram 100 may be performed by hardware, software, firmware or a combination thereof. The operations 100 may be performed by one, or respective, means, a means being any suitable means such as one or more processors or controllers in combination with computer-readable instructions provided on one or more memories. Note that the order of operations of the signal flow diagram 100 is not necessarily indicative of their order of processing or performance.

In operation 101 (which may be omitted in some example embodiments), the UE 91 indicates to the network node 92 a capability of either needing or not needing additional MPR on boosting-limited regions.

At operation 102, the network node 92 indicates configuration information to the UE 91, for example including that pi/2 BPSK based modulation is to be used. The operation 102 (which may be triggered by the operation 101, if provided) is similar to the operation 92 described above.

In operation 103 (which may be omitted in some example embodiments), the UE 91 requests that boosting-limited RB allocations are not configured. Note that the operations 101 and 103 may be different options, such that one may be omitted in some example embodiments. The operation 103 may, for example, be used if the UE always wants to transit with highest possible transmit power.

In operation 104, the network node 92 sends scheduling info (e.g. in the form of downlink control information, DCI).

In operation 105, the UE 91 determines the boosting-limited RB allocations after receiving configuration for pi/2-BPSK based modulation. Alternatively, there may be a separate indication from gNB to UE to trigger the determination of boosting-limited RB allocations if gNB sends scheduling info which includes a configuration for a certain range of RB allocations. In this way, UE may just need to calculate and store in the memory a subset of boosting-limited RBs as such saving UE calculation resources. The operation 105 may be similar to the operation 95 described above.

In operation 106 (which may be omitted in some example embodiments), the UE 91 indicates its desired MPR to the network by sending message 106 to the network node 92. The message 106 may signal the MPR value or may signal a delta value with respect to the MPR of the RB allocation regions it belonged to (with the MPR for RB allocation region, for example, being predefined). This procedure may be useful, for example, as different UEs typically have different PA nonlinearity behaviour, thereby creating different IMD levels. In another scenario the UE may indicate a capability of needing or not needing additional MPR on boosting-limited regions, as noted above with respect to operation 101. Possible MPR signalling may be part of capability signalling.

In operation 107, the UE 91 determines Tx power following the parameter indicated or from a standards specification. The UE configures Tx power accordingly.

At operation 108, a PUSCH transmission is made from the UE to the network node using the transmit power as set in operation 107.

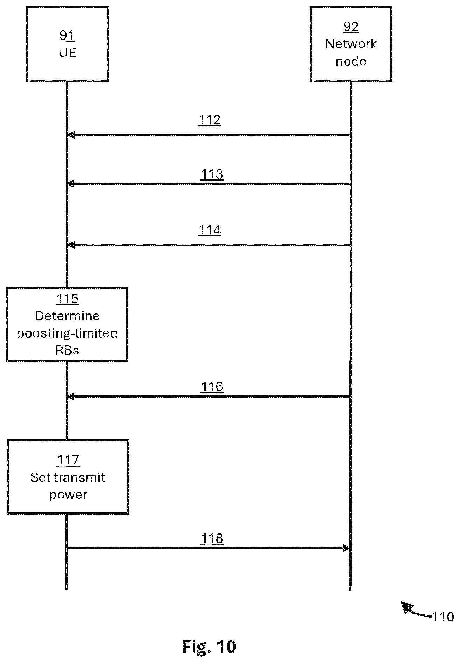

FIG. 10 is a signal flow diagram, indicated generally by the reference numeral 110, in accordance with an example embodiment. The signal flow diagram 110 shows messages transmitted between, and operations performed at, the UE 91 and the network node 92 in an example embodiment.

The operations of the signal flow diagram 110 may be performed by hardware, software, firmware or a combination thereof. The operations 110 may be performed by one, or respective, means, a means being any suitable means such as one or more processors or controllers in combination with computer-readable instructions provided on one or more memories. Note that the order of operations of the signal flow diagram 110 is not necessarily indicative of their order of processing or performance.

In the signal flow diagram 110, the network node 92 indicates the frequency offset of the emission mask before boosting-limited RB allocations are determined.

In operation 112, the network node 92 indicates configuration information to the UE, for example indicating that pi/2 BPSK based modulation is to be used.

In operation 113, the network node 92 indicates the frequencies of emission mask used for determining the MPR/boosting-limited RB allocations.

In operation 114, the network node 92 indicates UE a parameter for determining the MPR applying to the determined boosting-limited RB allocations (i.e., RB allocation calculated from the set of equations). The parameter may include
- a MPR value; or
- a delta value from the MPR of the RB allocation regions it belonged to in the specification; or
- emission mask limit based on which UE can derived the applicable MPR.

Alternatively, the parameter for determining the MPR applying to the determined boosting-limited RB allocations is predefined in the specifications.

In operation 115, the UE 91 determines the boosting-limited RB allocations after receiving configuration for pi/2-BPSK based modulation. Alternatively, there may be a separate indication from gNB to UE to trigger the determination of boosting-limited RB allocations after gNB sends scheduling info which includes a configuration for a certain range of RB allocations. In this way, UE may just need to calculate and store in the memory a subset of boosting-limited RBs as such saving UE calculation resource.

In operation 116, the network node 92 send scheduling info (e.g. DCI) to the UE 91.

If the configured allocation is of the boosting-limited RB allocations, then the UE 91 determines (operation 117) Tx power following the parameter indicated or from a standards specification. The UE configures Tx power accordingly.

At operation 118, a PUSCH transmission is made from the UE to the network node using the transmit power as set in operation 117.

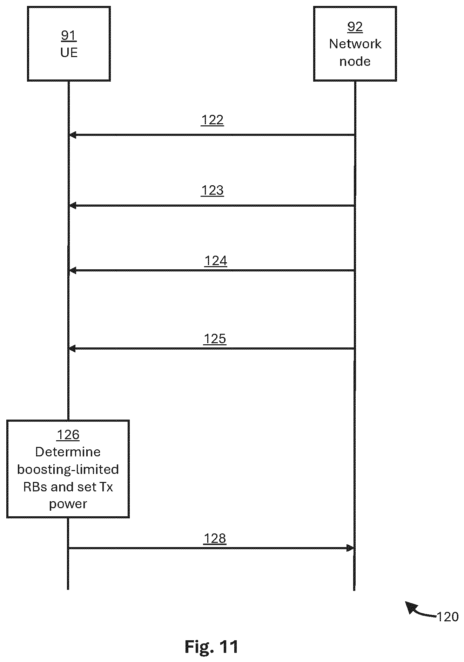

FIG. 11 is a signal flow diagram, indicated generally by the reference numeral 120, in accordance with an example embodiment. The signal flow diagram 120 shows messages transmitted between, and operations performed at, the UE 91 and the network node 92 in an example embodiment.

The operations of the signal flow diagram 120 may be performed by hardware, software, firmware or a combination thereof. The operations 120 may be performed by one, or respective, means, a means being any suitable means such as one or more processors or controllers in combination with computer-readable instructions provided on one or more memories. Note that the order of operations of the signal flow diagram 120 is not necessarily indicative of their order of processing or performance.

In the signal flow diagram 120, the network node 92 indicates the frequency offset of the emission mask only when configuring the UE for RB allocation belonging to a certain ranges of RB allocations, which may consist of boosting-limited RB allocations. This may save UE calculation resources as UE does not need to determine and store info of all boosting-limited RB allocations.

In operation 122, the network node 92 indicates configuration information, for example including an indication that pi/2 BPSK based modulation is to be used.

In operation 123, the network node 92 sends scheduling info (DCI) including configurations for boosting-limited RB allocations.

If the configured allocation is of a certain ranges of RB allocations, which may consist of boosting-limited RB allocations, the network node indicates (in operation 124) the frequencies of emission mask used for determining the boosting-limited RB allocations.

The network node indicates (in operation 125) a parameter for determining the MPR applying to the determined boosting-limited RB allocations:
- a MPR value; or
- a delta value with respect to the MPR of the RB allocation regions it belonged to in the specification; or
- emission mask limit based on which UE can derived the applicable MPR.

Alternatively, the parameter for determining the MPR applying to the determined boosting-limited RB allocations is predefined in the specifications.

In operation 126, the UE 91 determines the boosting-limited RB allocations after receiving info on emission masks and/or parameters for determining the MPR applying to the determined boosting-limited RB allocations.

In operation 126, the UE also determines the Tx power following the parameter indicated or from a standards specification and the UE configures the Tx power accordingly.

At operation 128, a PUSCH transmission is made from the UE to the network node using the transmit power as set in operation 126.

In the various embodiments described herein, it is generally assumed that the formulas to determine the boosting-limited RB allocations described in detail above are known by both relevant network node and relevant UE. For example, the formulas may be defined by the relevant standards specification. In some example embodiments, a network node may provide to the respective UE the parameters that are needed for the calculation and methods or information to determine the MPR values applied to the calculated boosting-limited RB allocations.

In the signal flow diagrams 110 and 120, the configuration of the boosting-limited RB allocations depends on the frequency offsets of the emission mask as the limiting RF requirement may not be always SEM but another. Therefore, such frequency information needs to be known by UE to determine if the scheduled RB allocation is boosting-limited in order to determine relevant transmit power. The signal flow diagrams 120 and 130 different in when the UE is indicated frequency offset of the emission mask for the determination of boosting-limited RBs.

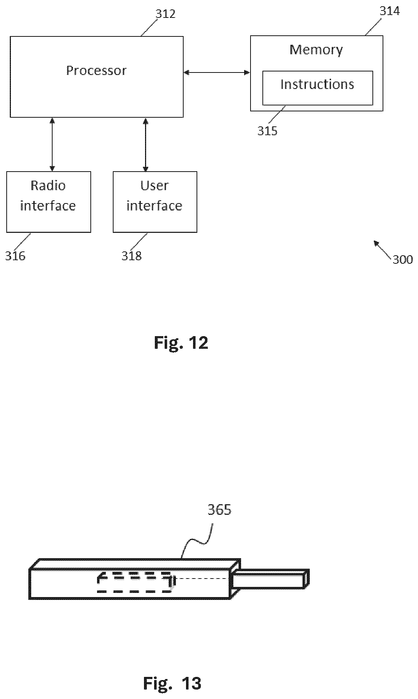

Fig. 12 shows, by way of example, a block diagram of an apparatus 300. The apparatus 300 comprises, for example, at least one processor 312 and at least one memory 314 storing instructions 315 that, when executed by the at least one processor, cause the apparatus 300 at least to perform the method or methods as disclosed herein, and any of the embodiments thereof. In an example, the at least one memory and the instructions (e.g. a computer program code, software), are configured, with the at least one processor, to cause the apparatus 300 to perform the method or methods as disclosed herein, and any of the embodiments thereof.

A processor 312 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 314 may be implemented using any suitable data storage technology. The memory may comprise a database for storing data. The memory 314 may be at least in part external to apparatus 300 but accessible to apparatus 300.

The instructions 315 may be comprised in a computer readable medium or a non-transitory computer readable medium (such as the non-transitory media 365 shown in FIG. 13). A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 300 is a terminal device, such as the UE of earlier figures. As another example, the apparatus is comprised in such a terminal device, e.g. as a chipset configured to control the terminal device. The apparatus 300 may be caused or configured to perform at least the method of FIG. 4 and/or any one or more of the embodiments described.

As another example, the apparatus 300 is a network node. In another embodiment, the apparatus is comprised in such a network node, e.g. as a chipset configured to control the network node. The apparatus 300 may be caused or configured to perform any one or more of the embodiments described.

The apparatus may comprise one or more entities of any of protocol layers, such as a MAC entity, an RRC entity, an RLC entity, a PDCP entity or a PHY entity.

The apparatus 300 comprises a radio interface 316. The radio interface 316 may provide the apparatus 300 with communication capabilities. The radio interface 316 may comprise a receiver configured to receive information in accordance with at least one cellular or non-cellular standard. The radio interface 316 may comprise a transmitter configured to transmit information in accordance with at least one cellular or non-cellular standard. The receiver may comprise more than one receiver. The transmitter may comprise more than one transmitter. The radio interface 316 may comprise a transceiver configured to receive and transmit information in accordance with at least one cellular or non-cellular standard. The transceiver may comprise more than one transceiver.

The apparatus 300 may comprise a user interface 318 comprising, for example, at least one of a keypad, a microphone, a touch display, a display, a speaker, etc. The user interface 318 may be used to control the apparatus by the user. The user interface 318 may be external to the apparatus 300. For example, the apparatus 300 may be connected to another device, such as a computer, either via wireless or wired connection, and the apparatus 300 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 300. For example, the at least one processor 312, the memory 314, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

## Claims

1. A user equipment, UE, of a mobile communication system, the UE comprising:
at least one processor; and
at least one memory storing instructions that, when executed by the at least one processor, cause the UE at least to:
determine whether a resource block, RB, allocation for a radio signal waveform is a boosting-limited RB allocation based on:
a first parameter including a maximum number of RBs in a channel bandwidth, N_RB, for communications between the UE and a network node of the mobile communication system;
a second parameter including a guard band parameter based on a guard band, GB_U, on an upper edge of the UE channel bandwidth or based on a guard band, GB_L, on a lower edge of the UE channel bandwidth;
a third parameter including a maximum frequency offset, $Δ {f}_{OBO}^{L}$, starting from a lower edge of UE channel bandwidth of a spectrum emission mask, SEM, or a maximum frequency offset, ${f}_{OBO}^{U}$, starting from an upper edge of UE channel bandwidth of the SEM that limit the power boosting capability; and
a fourth parameter including a spectrum shaping parameter, %SS, based on a percentage of the UE channel bandwidth that is shaped; and
decide transmission power for the RB allocation according to the determination whether the RB allocation is a boosting-limited RB allocation.

2. The UE of claim 1, wherein the RB allocation is defined by an index of the first RB of the RB allocation, RB_start, and a number of RBs in the RB allocation, LCRB.

3. The UE of claim 2, wherein the determining comprises determining whether the following condition is met: $ceil \left(\frac{1}{4} N_RB-\frac{3}{4}L_CRB-\frac{GB _ L + {Δf}_{OBO}^{L}}{2 ∗ {BW}_{RB}}+\frac{%SS ∗ LCRB}{4}\right) < = RB_start < =$ $floor \left(\frac{1}{4} N_RB-\frac{3}{4}L_CRB-\frac{GB _ L}{2 ∗ {BW}_{RB}}+\frac{%SS ∗ LCRB}{4}\right)$, wherein BW_{RB} is a bandwidth of each RB.

4. The UE of claim 2 or claim 3 wherein the determining comprises determining whether the following condition is met: $ceil \left(\frac{1}{4} N_RB-\frac{1}{4}L_CRB-\frac{GB _ L + {Δf}_{OBO}^{L}}{2 ∗ {BW}_{RB}}-\frac{%SS ∗ LCRB}{4}\right) < =$ $RB_start < = floor \left(\frac{1}{4} N_RB-\frac{1}{4} L_CRB-\frac{GB _ L}{2 ∗ {BW}_{RB}}-\frac{%SS ∗ LCRB}{4}\right)$, wherein BW_{RB} is a bandwidth of each RB.

5. The UE of any of claims 2 to 4, wherein the determining comprises determining whether the following condition is met: $ceil \left(\frac{3}{4}N_RB-\frac{3}{4}L_CRB+\frac{GB _ U}{2 ∗ {BW}_{RB}}+\frac{%SS ∗ LCRB}{4}\right) < =$ $RB _ start < = floor \left(\frac{3}{4}N_RB-\frac{3}{4}LCRB+\frac{GB _ U + {Δf}_{OBO}^{H}}{2 ∗ {BW}_{RB}}+\frac{%SS ∗ LCRB}{4}\right)$, wherein BW_{RB} is a bandwidth of each RB.

6. The UE of any of claims 2 to 5, wherein the determining comprises determining whether the following condition is met: $ceil \left(\frac{3}{4}N_RB-\frac{1}{4}L_CRB+\frac{GB _ U}{2 ∗ {BW}_{RB}}-\frac{%SS ∗ LCRB}{4}\right) < =$ $RB _ start < = floor \left(\frac{3}{4}N_RB-\frac{1}{4} L_CRB+\frac{GB _ U + {Δf}_{OBO}^{H}}{2 ∗ {BW}_{RB}}-\frac{%SS ∗ LCRB}{4}\right)$, wherein BW_{RB} is a bandwidth of each RB.

7. The UE of any of the preceding claims, wherein the deciding transmission power for the RB allocation comprises:
deciding a parameter associated with the transmission power, wherein the parameter comprises at least one of: a power boosting, a maximum power reduction, MPR, a power boosting offset, or a MPR offset for the RB allocation.

8. The UE of claim 7, wherein the parameter associated with the transmission power is specified in a standard or received from the network node.

9. The UE of claim 7 or claim 8, wherein the instructions, when executed by the at least one processor, further cause the UE to indicate the decided parameter to the network node.

10. The UE of any of the preceding claims, wherein the instructions, when executed by the at least one processor, further cause the UE to receive configuration information from the network node, wherein the configuration information includes configuration of the modulation and waveform of the radio signal.

11. The UE of claim 10, wherein the configured radio signal waveform is a single carrier waveform with phase-rotated phase shift keying modulation, and wherein the determining is in response to the configuration of the single carrier waveforms with phase-rotated phase shift keying modulation.

12. The UE of any of the preceding claims, wherein the instructions, when executed by the at least one processor, further cause the UE at least to:
receive an indication to determine whether the RB allocation is a boosting-limited RB allocation, and wherein the determining is in response to the received indication.

13. The UE of any of the preceding claims, wherein the instructions, when executed by the at least one processor, further cause the UE at least to:
send to the network node an indication whether additional power reduction is needed for boosting-limited RB allocation.

14. The UE of any of the preceding claims, wherein the instructions, when executed by the at least one processor, further cause the UE at least to:
send to the network node a request not to configure boosting-limited RB allocation.

15. A method comprising determining whether a resource block, RB, allocation for a radio signal waveform is a boosting-limited RB allocation based on:
a first parameter including a maximum number of RBs in a channel bandwidth, N_RB, for communications between a UE and a network node of a mobile communication system;
a second parameter including a guard band parameter based on a guard band, GB_U, on an upper edge of the UE channel bandwidth or based on a guard band, GB_L, on a lower edge of the UE channel bandwidth;
and
a third parameter including a maximum frequency offset, ${Δf}_{OBO}^{L}$, starting from a lower edge of UE channel bandwidth of a spectrum emission mask, SEM, or a maximum frequency offset, ${f}_{OBO}^{U}$, starting from an upper edge of UE channel bandwidth of the SEM that limit the power boosting capability; and
a fourth parameter including a spectrum shaping parameter, %SS, based on a percentage of the UE channel bandwidth that is shaped,
wherein the method further comprises:
deciding transmission power for the RB allocation according to the determination whether the RB allocation is a boosting-limited RB allocation.
